# EUROPÄISCHE PATENTSCHRIFT

(11) **EP 4 256 970 B1**
(45) Veröffentlichungstag und Bekanntmachung des Hinweises auf die Patenterteilung: **18.11.2026**
(21) Anmeldenummer: 22167072.2
(22) Anmeldetag: 07.04.2022
(51) Int. Cl.: A23J 1/12, A23J 1/14, A23J 3/14

(54) **VERFAHREN ZUR HERSTELLUNG EINES PROTEINPRODUKTES**
METHOD FOR PRODUCING A PROTEIN PRODUCT
PROCÉDÉ DE FABRICATION D'UN PRODUIT PROTÉIQUE

(43) Veröffentlichungstag der Anmeldung: 11.10.2023
(73) Patentinhaber: Verbio SE, 06780 Zörbig (DE)
(72) Erfinder: Bonk, Fabian, 04315 Leipzig (DE); van Putten, Anton, 49565 Bramsche (DE); von Laer, Michael, 06114 Halle (Saale) (DE); Schlimbach, Michael, 06120 Halle (Saale) (DE); Lüdtke, Oliver, 04416 Markkleeberg (DE); Kraft, Benno, 06108 Halle (DE)
(74) Vertreter: Gulde & Partner

(56) Entgegenhaltungen:
- US-A1- 2019 160 470
- US-B2- 7 481 890
- CHATZIFRAGKOU AFRODITI ET AL: "Extractability and characteristics of proteins deriving from wheat DDGS", FOOD CHEMISTRY, ELSEVIER LTD, NL, vol. 198, 11 November 2015 (2015-11-11), pages 12 - 19, XP029379549, ISSN: 0308-8146, DOI: 10.1016/J.FOODCHEM.2015.11.036

## Beschreibung

Die Erfindung betrifft ein Verfahren zur Herstellung eines Proteinproduktes.

### Technologischer Hintergrund

In Deutschland ist eine Reduktion des CO₂-Ausstoßes von Kraftstoffen gesetzlich vorgeschrieben, die unter anderem durch die Beimischung von Bioethanol erzielt werden kann. Die Produktion von Bioethanol aus pflanzlichen Rohstoffen ist bekannt. Wichtige Rohstoffe für die Bioethanolproduktion sind Getreide wie z.B. Roggen, Mais, Weizen und Triticale.

Für die Bioethanolproduktion wird das Getreide vermahlen, angemaischt und unter Zusatz von Hefe fermentiert. Die fermentierte Maische wird einer Destillation zugeführt, bei der durch die Abtrennung des Ethanols als Nebenprodukt die sogenannte Schlempe (Synonym: Dickschlempe) entsteht, die sich vor allem aus nicht zu Ethanol umgesetzten organischen Bestandteilen der Maische, Salzen und Hefe zusammensetzt.

Schlempe wird typischerweise direkt als Rohprodukt, in getrockneter Form oder in folgenden weiteren Formen als Futtermittel verwendet:
- Dünnschlempe (Flüssig-Phase aus Fest-Flüssig-Trennung von Schlempe)
- Schlempefeststoff (Fest-Phase aus Fest-Flüssig-Trennung von Schlempe, wird auch als "wet cake" oder "wet distillers grains" bezeichnet)
- Dünnschlempekonzentrat (eingedampfte Dünnschlempe)
- WDGS ("wet distillers grains and solubles", Mischung aus Dünnschlempekonzentrat und Schlempefeststoff)
- DDGS ("dried distillers grains with solubles" = getrocknete Mischung aus Dünnschlempekonzentrat und Schlempefeststoff)

Von den oben genannten Futtermitteln weist Dünnschlempe bzw. Dünnschlempekonzentrat den höchsten Rohproteingehalt auf. Allerdings liegt der Rohproteingehalt nur im Bereich zwischen ca. 20 und 45 Gew.-%TS, woraus ein geringer Verkaufswert resultiert.

Um die Wertschöpfung zu steigern und einen Einsatz in der Lebensmittelindustrie zu ermöglichen, ist ein Produkt mit möglichst hohem Rohproteingehalt in Kombination mit nutritiven Eigenschaften erstrebenswert. Als Ausgangsmaterial für die Produktion eines Proteinproduktes für die Futtermittelindustrie oder Lebensmittelindustrie eignet sich besonders Dünnschlempe und Dünnschlempekonzentrat, da diese den höchsten Rohproteingehalt unter den Nebenprodukten einer Bioethanolanlage aufweisen. Andere Nebenprodukte wie z.B. WDGS, DDGS oder Schlempefeststoff als Rohstoff einzusetzen, erhöht den operativen Aufwand, da alle einen niedrigeren Rohproteingehalt als Dünnschlempe aufweisen.

Bekannte Verfahren, um aus Dünnschlempe ein Produkt mit hohem Rohproteingehalt zu gewinnen, erreichen zwar höhere, aber nicht ausreichend hohe Rohproteingehalte.

Zum Beispiel wurden durch Filtration und Sprühtrocknung von Dünnschlempe aus der Getreideverarbeitung ein Rohproteingehalt von max. 30,5 Gew.-%TS erreicht (DE 20 2009 013 389 U1). Mit einem Trikanter kann Dünnschlempe in eine Ölfraktion, eine wässrige Fraktion und eine proteinreiche Paste getrennt werden, die max. 58,6 Gew.-%TS Rohprotein enthält (US 2014/0242251 A1).

Um höhere Rohproteingehalte zu erreichen, wurde daher versucht, Proteine aus dem Feststoff in Lösung zu bringen. Die proteinhaltige Lösung wird dann vom Feststoff getrennt, um daraufhin die Proteine aus der Lösung zu gewinnen. Bekannte Verfahren, um Proteine in Lösung zu bringen, sind hohe Temperaturen in Verbindung mit einer alkalischen wässrigen Prozessflüssigkeit (WO2021204391A1), einem Lösungsmittel ausgewählt aus der Gruppe Ethanol und Hexan (US8454802B2), oder einem der genannten Lösungsmittel in Verbindung mit Natriumhydroxid (US9487565B2).

Zum Beispiel behandelten Chatzifragkou et al. (2016) Dickschlempe (bezeichnet als "spent solids") für 30 Minuten bei 50-90 °C mit 70 Vol.-% Ethanol. Ein Großteil der Proteine wurde in die ethanolhaltige Lösung extrahiert. Diese ethanolhaltige Lösung wurde mit deionisiertem Wasser verdünnt, auf -20 °C gekühlt und die ausgefallenen Proteine mittels Zentrifugation abgetrennt, mit deionisiertem Wasser gewaschen und im Gefriertrockner getrocknet. Der resultierende Feststoff enthielt einen reduzierten Rohproteingehalt von 4,7 Gew.-% und das über Ethanol extrahierte Proteinextrakt einen Rohproteingehalt von 62,4 Gew.-% (Afroditi Chatzifragkou, Parvathy Chandran Prabhakumari, Ondrej Kosik, Alison Lovegrove, Peter R. Shewry, Dimitrios Charalampopoulos, Extractability and characteristics of proteins deriving from wheat DDGS, Food Chemistry, Volume 198, 2016, Pages 12-19).

Nachteilig an diesem Verfahren sind der Energieverbrauch, um die Temperaturen von 50-90 °C für die Extraktion der Proteine in die ethanolhaltige Lösung einzustellen, sowie die aufwändigen Verfahrensschritte zur Ausfällung und Abtrennung der Proteine aus der ethanolhaltigen Lösung und die damit verbundene Kühlenergie.

Ein weiteres Beispiel, bei dem Proteine in Lösung gebracht und dann aus der Lösung gewonnen werden, stellt die Patentanmeldung WO2021204391A1 dar. Der Hauptanspruch dieses Verfahrens ist in Fig. 1 dargestellt und soll im Folgenden näher beschrieben werden: Dünnschlempe wird einer Fest-Flüssig-Trennung zugeführt, wobei die Fest-Phase weiterverwendet wird. Diese Fest-Phase wird mit einer wässrigen Prozessflüssigkeit verdünnt und anschließend auf mindestens 60 °C temperiert. Der pH-Wert der temperierten verdünnten Fest-Phase wird anschließend alkalisch gestellt. Dieser alkalische Prozessstrom wird abgekühlt und einer Fest-Flüssig-Trennung zugeführt, wobei die Flüssig-Phase weiterverwendet wird. Der pH-Wert dieser Flüssig-Phase wird auf einen sauren pH-Wert gestellt und diese saure Flüssig-Phase anschließend einer Fest-Flüssig-Trennung zugeführt, wobei die Fest-Phase weiterverwendet wird. Diese Fest-Phase wird in einem Lösungsmittel dispergiert und anschließend einer Fest-Flüssig-Trennung zugeführt, wobei die Fest-Phase das Proteinprodukt darstellt oder enthält. In diesem Verfahren können Rohproteingehalte von mindestens 70 Gew.-%TS erreicht werden. Nachteilig an diesem Verfahren sind allerdings die Kosten für Lauge, Säure, Wärmeenergie für das Temperieren sowie die Vielzahl an Behältern und Trennapparaten und damit die hohen Investitionskosten in Behälter und Apparate.

US2019/0160470A1 beschreibt ein Verfahren und ein System zur Verringerung des Gehalts an nicht vergärbaren Feststoffen in einem Proteinanteil mittels einer Gegenstromwäsche am hinteren Ende eines Mais-Trockenmahlprozesses zur Herstellung von Alkohol. Das Verfahren umfasst die Trennung des gesamten Schlempe-Nebenprodukts in einen unlöslichen Feststoffanteil und einen Schlempeanteil (Zentrat), der Protein enthält. Danach kann der Schlempeanteil in einen wasserlöslichen Feststoffanteil und einen Proteinanteil getrennt werden. Der Proteinanteil kann mit sauberem Wasser gemischt werden, um den Proteinanteil zu waschen und zu verdünnen. Der verdünnte Proteinanteil kann entwässert werden, um einen entwässerten Proteinanteil und ein Zentrat zu bilden. Ein Teil des Zentrats kann als Protein-Gegenstromwäsche verwendet werden, wenn der Proteinanteil von dem Schlempeanteil getrennt wird. Die Protein-Gegenstromwäsche reduziert die Menge an nicht fermentierbaren Feststoffen in der Proteinportion und im Zentrat.

Weiterhin ist der Stand der Technik aus naheliegenden Bereichen entweder nicht anwendbar oder bringt zu viele Nachteile mit sich:
Bekannt sind z.B. Proteinisolate aus Maismaische, die Rohproteingehalte von bis zu 73 Gew.-%TS aufweisen (US 4624805 A). Nachteilig an diesen Produkten ist, dass sie nicht aus Reststoffen wie z.B. Dünnschlempe, sondern aus dem unfermentierten Rohstoff Maismaische gewonnen werden und daher weniger nachhaltig sind. Auch enthält Maismaische im Vergleich zu Dünnschlempe keine Hefen, die positiven Einfluss auf die nutritiven und funktionellen Eigenschaften von Proteinprodukten haben. Ein weiterer Nachteil besteht darin, dass Maismaische im Vergleich zu Dünnschlempe vor allem aus Stärke besteht. Der Rohproteingehalt von Maismaische macht nur ca. 8 Gew.-%TS aus und ein Großteil der Proteine ist zwischen Stärkekörnern gebunden. Im Gegensatz dazu hat Dünnschlempe bereits eine Fermentation, in der die Stärke größtenteils abgebaut wird, sowie eine Destillation durchlaufen, die einen weiteren Aufschluss der organischen Polymere und Strukturen bewirkt. Dadurch ergeben sich andere Anforderungen an die Proteinextraktion bei Maismaische im Vergleich zu Dünnschlempe

Demnach besteht ein anhaltender Bedarf an effizienten Herstellungsverfahren für hochwertige Proteinprodukte mit einem hohen Rohproteingehalt, bei denen im Sinne der Nachhaltigkeit auf Nebenprodukte der Bioethanolproduktion wie Dünnschlempe als Rohstoff zurückgegriffen wird.

### Zusammenfassung der Erfindung

Die vorliegende Erfindung greift die zuvor beschriebene Aufgabenstellung auf und löst diese gemäß Anspruch 1 durch Bereitstellen eines Verfahrens zur Herstellung eines Proteinproduktes. Das Verfahren umfasst die Schritte:
a) Herstellen eines ersten Gemisches aus i) Dünnschlempe und ii) einer ersten wässrigen Lösung oder einem ersten organischen Lösungsmittel;
b) Separieren einer Fest-Phase aus dem ersten Gemisch mittels einer ersten Fest-Flüssig-Trennung;
c) Herstellen eines zweiten Gemisches aus i) der Fest-Phase und ii) einer zweiten wässrigen Lösung oder einem zweiten organischen Lösungsmittel mit der Maßgabe, dass das erste Gemisch und/oder das zweite Gemisch ein organisches Lösungsmittel enthalten muss, wobei das erste und/oder zweite organische Lösungsmittel Ethanol, Isopropanol oder Ethylacetat enthält, und wobei das erste und/oder zweite organische Lösungsmittel mindestens 80 Gew.-% Ethanol enthält; und
d) Separieren einer Fest-Phase aus dem zweiten Gemisch mittels einer zweiten Fest-Flüssig-Trennung, wobei die Fest-Phase das Proteinprodukt umfasst oder beinhaltet.

In Schritt (a) wird der Dünnschlempe eine wässrige Lösung oder ein organisches Lösungsmittel zugegeben.

Aus dem Gemisch aus Dünnschlempe und Lösung aus Schritt (a) wird in Schritt (b) mittels Fest-Flüssig-Trennung eine Fest-Phase separiert.

In Schritt (c) wird der Fest-Phase aus Schritt (b) eine wässrige Lösung oder ein organisches Lösungsmittel zugegeben, wobei mindestens in Schritt (a) oder Schritt (c) ein organisches Lösungsmittel eingesetzt wird.

In Schritt (d) wird das Gemisch aus (c) mittels Fest-Flüssig-Trennung in eine weitere Fest-Phase und eine weitere Flüssig-Phase separiert.

Überraschenderweise wurde festgestellt, dass entgegen dem Stand der Technik der Rohproteingehalt der Fest-Phase durch die Zugabe eines organischen Lösungsmittels nicht sinkt, sondern im Gegenteil deutlich steigt.

Die mit der Erfindung erzielten Vorteile im Vergleich zu bekannten Verfahren bestehen insbesondere darin, dass eine deutliche Erhöhung des Rohproteingehalts im Proteinprodukt im Vergleich zur Dünnschlempe erzielt wird. Des Weiteren wird der Einsatz von Säuren und Laugen deutlich reduziert oder sogar obsolet, sowie die Anzahl der Verfahrensschritte und Komplexität des Verfahrens deutlich reduziert, da Protein nicht in Lösung gebracht und danach wieder aus dem Lösungsmittel aufwendig abgetrennt werden muss. Auch wird der Wärmeenergieeinsatz reduziert, der typischerweise notwendig ist, um Proteine in Lösung zu bringen. Überraschenderweise ist es mit der erfindungsgemäßen Verfahrensweise gelungen, mit dem Einsatz von einem organischen Lösungsmittel den Rohproteingehalt von Dünnschlempe aus Schritt (a) zu Fest-Phase in Schritt (d) zu erhöhen. Bisher wurde im Stand der Technik immer eine Extraktion von Protein in Ethanol und damit eine Verringerung des Rohproteingehalts in der Fest-Phase beschrieben (siehe z.B. Chatzifragkou et al. (2016)).

Weitere Ausführungsformen werden in der detaillierten Beschreibung und den Figuren erläutert.

### Kurzbeschreibung der Figuren

Die Erfindung wird nachfolgend anhand eines Ausführungsbeispiels und dazugehöriger Zeichnung im Vergleich zum Stand der Technik näher erläutert.

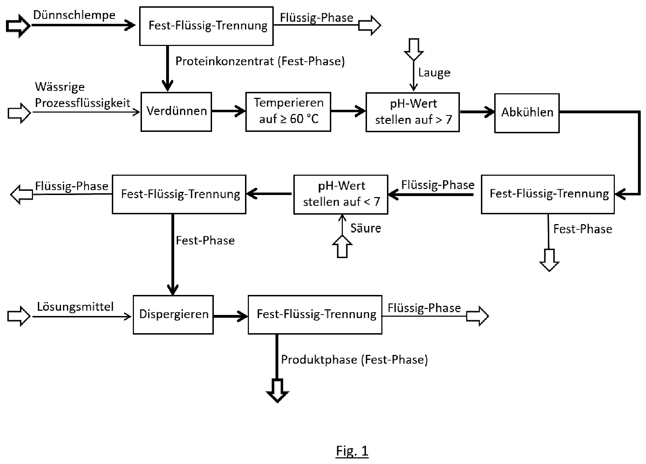

Fig. 1 beschreibt den Stand der Technik.
Fig. 2a und 2b beschreiben schematische Prozessabläufe von erfindungsgemäßen Ausführungsformen des Verfahrens.
Fig. 3 beschreibt einen schematischen Prozessablauf einer weiteren erfindungsgemäßen Ausführungsform des Verfahrens.

### Detaillierte Beschreibung der Erfindung

Im Zusammenhang der vorliegenden Erfindung wird unter der Trockensubstanz (TS) der Feststoffrückstand verstanden, welcher nach Entfernen des Lösungsmittels (z.B. Wasser oder organisches Lösungsmittel) aus einer Suspension (z.B. aus Schlempe) oder aus einer Lösung erhalten wird. Das heißt, der Feststoffrückstand ist als Gesamtheit aller zuvor gelösten oder suspendierten Feststoffe (z.B. Rohproteine, Hefe und Salze) zu verstehen. Die Masse der Trockensubstanz wird Trockenmasse genannt.

Im Zusammenhang der vorliegenden Erfindung wird unter Trockensubstanzgehalt (TS-Gehalt) der prozentuale Massenanteil der Trockensubstanz bezogen auf die Gesamtmasse der Suspension oder Lösung verstanden. Der Trockensubstanzgehalt wird in Gewichtsprozent (Gew.-%) angegeben.

Unter "Rohproteingehalt" ist in dieser Erfindung der Anteil des Rohproteins an der Trockensubstanz (TS) zu verstehen. Der Rohproteingehalt (RP-Gehalt) einer Probe wird analytisch mittels Kjeldahlscher Stickstoffbestimmung bestimmt. Hierbei wird der analytisch ermittelte Stickstoffgehalt der Probe mit dem Umrechnungsfaktor 6,25 multipliziert, um den Rohproteingehalt zu erhalten. Dieser wird in Gew.-%TS angegeben.

Die Erhöhung des Rohproteingehalts meint die relative Änderung im Rohproteingehalt zwischen zwei Stoffen und wird in %rel angegeben. Wenn zum Beispiel ein Proteinprodukt mit einem Rohproteingehalt von 35 Gew.-%TS aus einer Dünnschlempe mit einem Rohproteingehalt von 20 Gew.-%TS hergestellt wird, beträgt die Erhöhung des Rohproteingehalts 75 %rel.

Im Zusammenhang der vorliegenden Erfindung wird unter der Partikelgrößenverteilung die auf das Volumen bezogene Verteilung von Partikeln verstanden, die wie von Wang et al. (2009) beschrieben mit einem Laser Scattering Particle Size Analyzer bestimmt wird (Wang, H., Wang, T., Pometto, A.L., III and Johnson, L.A. (2009), A Laboratory Decanting Procedure to Simulate Whole Stillage Separation in Dry-Grind Corn Ethanol Process. J Am Oil Chem Soc, 86: 1241-1250). Der d50-Wert und der d90-Wert beschreiben, wie aus dem Stand der Technik bekannt, statistische Größen, die aus der kumulativen Partikelgrößenverteilung abgelesen werden. Sie geben die Partikelgröße in µm an, unter der 50% (d50-Wert) bzw. 90% (d90-Wert) aller gemessenen Partikel in der auf das Volumen bezogene Verteilung zu finden sind.

Der Begriff "Schlempe" umfasst in dieser Erfindung den Rückstand aus der Destillation einer ethanolhaltigen Maische. Der Begriff "Dickschlempe" wird synonym für Schlempe verwendet.

Im Zusammenhang mit der vorliegenden Erfindung wird unter "Fest-Flüssig-Trennung" ein Verfahren verstanden, das eine Suspension in ein Zweiphasen-System, umfassend eine Fest-Phase und eine Flüssig-Phase, separiert. Die Fest-Flüssig-Trennung kann vorzugsweise in einem Separator, Sedicanter oder Dekanter erfolgen. Eine Fest-Flüssig-Trennung kann auch durch andere Verfahren wie z.B. Filtrieren realisiert werden.

Unter einer Fest-Phase wird in einem Zweiphasen-System die Phase verstanden, die den höheren Trockensubstanzgehalt aufweist. Eine Fest-Phase kann dabei eine Suspension oder einen sedimentierten Feststoff (Rückstand) umfassen. Unter einer Flüssig-Phase wird in einem Zweiphasen-System die Phase verstanden, die den geringeren Trockensubstanzgehalt aufweist. Eine Flüssig-Phase kann dabei eine Suspension oder klare Lösung umfassen.

Unter wässriger Lösung ist eine Lösung zu verstehen, die mehrheitlich aus Wasser besteht. Mehrheitlich bedeutet mehr als 50 Gew.-%.

Bei der Verarbeitung von Maniok oder Getreide wie z.B. Roggen, Weizen, Mais, Triticale, Gerste, Reis und Hirse oder Kombinationen daraus zu Bioethanol entsteht nach der Abtrennung des Ethanols aus der fermentierten Maische das Nebenprodukt Schlempe. Die Zusammensetzung der Schlempe wird von der Getreideart und von der Prozessführung des Bioethanolprozesses beeinflusst.

Es kann Schlempe aus Bioethanolanlagen zur Biokraftstoffherstellung verwendet werden, sowie Schlempe aus Bioethanolanlagen zur Herstellung anderer Ethanolprodukte wie z.B. Trinkalkohol oder Desinfektionsmittel.

Aus der Schlempe kann eine Vielzahl weiterer Nebenprodukte hergestellt werden. So entsteht durch Fest-Flüssig-Trennung von Schlempe eine Fest-Phase und eine Flüssig-Phase. Dies geschieht vorzugsweise mit einem Dekanter oder einer Filterpresse. Die Fest-Phase wird als Schlempefeststoff, wet cake oder wet distillers' grain bezeichnet wird. Der Schlempefeststoff kann zu DDG getrocknet werden. Die Flüssig-Phase wird als Dünnschlempe bezeichnet. Dünnschlempe kann zu Dünnschlempekonzentrat eingedampft werden. In diesem Schritt kann optional auch Öl abgetrennt werden, z.B. mit einem Trikanter. Dünnschlempekonzentrat kann mit Schlempefeststoff zu WDGS gemischt werden. Auch kann aus Dünnschlempekonzentrat zusammen mit DDG das sogenannte DDGS hergestellt werden. Auch weitere Kombinationen wie z.B. eine Mischung aus Schlempe und Schlempefeststoff können als Nebenprodukt hergestellt werden.

Unter den genannten Nebenprodukten eignet sich besonders die Dünnschlempe für die Herstellung eines Proteinproduktes, da diese bereits einen hohen Rohproteingehalt aufweist. Der Trockensubstanzgehalt (TS-Gehalt) einer Dünnschlempe kann vorzugsweise mindestens 5 Gew.-% und maximal 18 Gew.-% betragen. In einer Ausführungsform des Verfahrens kann die Dünnschlempe zu Dünnschlempekonzentrat eingedampft werden, bevor die wässrige Lösung bzw. das organische Lösungsmittel in Schritt (a) zugegeben wird. Der TS-Gehalt des Dünnschlempekonzentrats kann vorzugsweise 21 bis 33 Gew.-% betragen. Dünnschlempekonzentrat wird im Englischen unter anderem als "condensed distillers solubles" oder "syrup" bezeichnet.

In einer bevorzugten Ausführungsform weist die Dünnschlempe eine auf Partikelvolumen bezogene Partikelgrößenverteilung mit einem d50-Wert von maximal 100 µm, bevorzugt maximal 50 µm und einem d90-Wert von maximal 1000 µm, bevorzugt maximal 500 µm auf. Dem Fachmann ist bekannt, wie sich die Partikelgrößenverteilung von Stoffströmen beeinflussen lässt.

Als Beispiel für Partikelgrößenverteilungen von Dünnschlempe und Schlempe sei auf Wang et al. (2009) verwiesen, in deren Studie ein d50-Wert von ca. 10-50 µm für Dünnschlempe ("thin stillage") und ca. 100-500 µm für Schlempe ("industry whole stillage"), sowie ein d90-Wert von 500-1000 µm für Dünnschlempe und über 1000 µm für Schlempe gemessen wurde.

In einer bevorzugten Ausführungsform ist das Verfahren so ausgestaltet, dass die Dünnschlempe einen sauren pH aufweist. In einer besonders bevorzugten Ausführungsform ist das Verfahren so ausgestaltet, dass die Dünnschlempe, die Fest-Phasen und Gemische in den Schritten (a), (b) und (c) nicht auf einen alkalischen pH-Wert gestellt werden. Dies ist vorteilhaft, da so Kosten für Lauge und negative Auswirkungen auf Proteinprodukteigenschaften im Vergleich zum Stand der Technik reduziert werden.

In einer bevorzugten Ausführungsform kann das erfindungsgemäße Verfahren so ausgestaltet sein, dass die Dünnschlempe oder das Dünnschlempekonzentrat vor der Zugabe von wässriger Lösung oder organischem Lösungsmittel in Schritt (a) einer Ölabtrennung zugeführt wird, und mithilfe dem Stand der Technik bekannter Verfahren Öl abgetrennt wird. Dies ist vorteilhaft, da so der Rohproteingehalt der Dünnschlempe bzw. des Dünnschlempekonzentrats gesteigert wird und Öl als werthaltiges Produkt gewonnen werden kann. In einer weiteren Ausführungsform kann das erfindungsgemäße Verfahren so ausgestaltet sein, dass die Ölabtrennung mit Hilfe eines Tricanters in Schritt (b) und/oder Schritt (d) erfolgt.

In einer weiteren Ausführungsform kann das erfindungsgemäße Verfahren so ausgestaltet sein, dass die Dünnschlempe aus DDGS oder WDGS oder getrockneter Schlempe hergestellt wird, die in wässriger Lösung resuspendiert wurden. Dies kann z.B. vorteilhaft sein, wenn die Produktionsorte von Schlempe und Proteinprodukt weit entfernt voneinander sind.

In einer bevorzugten Ausführungsform ist das Verfahren so ausgestaltet, dass in Schritt (a) die Menge an wässriger Lösung oder organischem Lösungsmittel so gewählt wird, dass sich im Gemisch ein TS-Gehalt von max. 19 Gew.-%, bevorzugt max. 9 Gew.-%, besonders bevorzugt max. 4 Gew.-% ergibt. Die wässrige Lösung bzw. das organische Lösungsmittel in Schritt (a) weist einen geringeren TS-Gehalt als das Gemisch in Schritt (a) auf. Bevorzugt weist die wässrige Lösung bzw. das organische Lösungsmittel einen TS-Gehalt von unter 10 Gew.-% auf.

Aus dem in Schritt (a) bereitgestellten Gemisch wird in Schritt (b) mittels Fest-Flüssig-Trennung eine Fest-Phase separiert. Diese Fest-Flüssig-Trennung ist unter anderem darum vorteilhaft, da somit ein Teil des Salzgehalts von der suspendierten Biomasse separiert werden. Die Flüssig-Phase kann z.B. einer Biogasanlage zugeführt werden. Bevorzugt wird die Flüssig-Phase einer Prozesswasseraufbereitung zugeführt. Enthält die Flüssig-Phase organisches Lösungsmittel ist es vorteilhaft, sie einer Rückgewinnung des organischen Lösungsmittels zuzuführen.

In einer bevorzugten Ausführungsform ist die Prozesswasseraufbereitung so gestaltet, dass ein Prozessflüssigkeitskonzentrat und eine wässrige Lösung hergestellt werden, wobei der TS-Gehalt des Prozessflüssigkeitskonzentrats deutlich höher als der TS-Gehalt der wässrigen Lösung ist. Bevorzugt stellt die Prozesswasseraufbereitung eine Eindampfung oder Umkehrosmose dar. Das Prozessflüssigkeitskonzentrat wird bevorzugt einer Biogasanlage zugeführt. Die wässrige Lösung wird bevorzugt einem der Schritte (a) bis (c) zugeführt.

In einer bevorzugten Ausführungsform umfasst das Verfahren ferner Schritt (b.2): Zugabe einer wässrigen Lösung zur Fest-Phase aus (b) und Separieren einer weiteren Fest-Phase aus diesem Gemisch aus wässriger Lösung und Fest-Phase aus Schritt (b) mittels Fest-Flüssig-Trennung, wobei die weitere Fest-Phase Schritt (c) zugeführt wird. Diese Fest-Flüssig-Trennung ist unter anderem darum vorteilhaft, da somit ein Teil des Salzgehalts von der suspendierten Biomasse separiert werden. Bevorzugt weist das Gemisch aus Fest-Phase und wässriger Prozessflüssigkeit einen TS-Gehalt von maximal 15 Gew.-%, bevorzugt maximal 11 Gew.-%, besonders bevorzugt maximal 8 Gew.-% auf. Bevorzugt weist die wässrige Lösung einen TS-Gehalt von weniger als 0,5 Gew.-% auf und ist ausgewählt aus der Gruppe umfassend Frischwasser und wässrige Lösungen aus Prozesswasseraufbereitungen wie z.B. Kondensate aus Eindampfungsanlagen oder Permeate aus Umkehrosmoseanlagen. Schritt (b.2) kann mehrfach erfolgen. Dies ist vorteilhaft, da so der Salzgehalt der suspendierten Biomasse weiter reduziert wird. Die Flüssig-Phase kann bevorzugt in Schritt (a) eingesetzt werden. Dies ist vorteilhaft, da so der Bedarf an Frischwasser oder aufbereitetem Prozesswasser im Verfahren reduziert wird. Auch kann die Flüssig-Phase zum Beispiel einer Biogasanlage oder einer Prozesswasseraufbereitung zugeführt werden.

In Schritt (c) wird der Fest-Phase aus Schritt (b) eine wässrige Lösung oder ein organisches Lösungsmittel zugegeben, wobei mindestens in einem der Schritte (a) oder (c) ein organisches Lösungsmittel eingesetzt wird. Falls in Schritt (a) kein organisches Lösungsmittel zugegeben wurde, muss demnach in Schritt (c) ein organisches Lösungsmittel zugeführt werden. Falls in Schritt (a) bereits organisches Lösungsmittel zugegeben wurde, ist die Zugabe von organischem Lösungsmittel in Schritt (c) optional. Überraschenderweise wurde festgestellt, dass entgegen dem Stand der Technik der Rohproteingehalt der Fest-Phase durch die Zugabe eines organischen Lösungsmittels nicht sinkt, sondern im Gegenteil deutlich steigt. Eine mögliche Erklärung, ohne Anspruch auf Vollständigkeit, ist das Weglassen der im Stand der Technik verwendeten harschen Bedingungen (lange Verweilzeit, hohe Temperaturen und alkalischer pH-Wert), welche mutmaßlich Proteine verstärkt in Lösung bringen und so den Rohproteingehalt in der mit einer Fest-Flüssig-Trennung abtrennbaren Fest-Phase senken. Bevorzugt ist das Verfahren so ausgestaltet, dass in Schritt (a) wässrige Lösung und in Schritt (c) organisches Lösungsmittel eingesetzt werden. So wurde in Ausführungsbeispiel 3b) mit dieser Variante eine Erhöhung des Rohproteingehalts im Proteinprodukt im Vergleich zur Dünnschlempe von 88 %rel erreicht, wohingegen in Ausführungsbeispiel 3a) bei Zugabe von organischem Lösungsmittel zu Schritt (a) und wässriger Lösung zu Schritt (c) eine Erhöhung des Rohproteingehalts von 76 %rel erreicht wurde.

Organische Lösungsmittel sind z.B. solche, die aus der Futtermittel- oder Lebensmittelverarbeitung bekannt sind wie z.B. Ethanol, Iso-Propanol, Ethylacetat oder Hexan. Organische Lösungsmittel müssen nicht in reiner Form zugegeben werden, sondern lediglich als Lösungen, die mehrheitlich organisches Lösungsmittel enthalten. Mehrheitlich bedeutet mehr als 50 Gew.-%. D.h. sie können z.B. auch Wasser enthalten oder als Mischung mit wässrigen Lösungen zugegeben werden. Dies hat den Vorteil, dass z.B. ein organisches Lösungsmittel eingesetzt werden kann, das über eine Destillation zurückgewonnen wurde und noch Wasser enthält. Gängige Methoden zur Rückgewinnung von Lösungsmitteln aus FlüssigPhasen und Fest-Phasen sind dem Fachmann bekannt. Wenn Ethanol als organisches Lösungsmittel eingesetzt wird, lässt sich die Rückgewinnung des Lösungsmittels sinnvoll mit einer Bioethanolanlage kombinieren.

Das erfindungsgemäße Verfahren ist so ausgestaltet, dass das organische Lösungsmittel in Schritt (a) und/oder Schritt (c) eine ethanolhaltige Lösung ist, die mindestens mind. 80 Gew.-%, besonders bevorzugt mind. 95 Gew.-% an Ethanol enthält.

In einer bevorzugten Ausführungsform kann das erfindungsgemäße Verfahren so ausgestaltet sein, dass eine Temperatur von 49 °C, bevorzugt 39 °C, besonders bevorzugt 29 °C nicht überschritten wird. Die niedrigen Temperaturen sind vorteilhaft, da so unter anderem der Energieverbrauch des Verfahrens reduziert werden kann.

In einer bevorzugten Ausführungsform kann das erfindungsgemäße Verfahren so ausgestaltet sein, dass in Schritt (c) so viel organisches Lösungsmittel zugegeben wird, dass sich ein TS-Gehalt von max. 15 Gew.-%, bevorzugt max. 9 Gew.-%, besonders bevorzugt max. 6 Gew.-% ergibt. Ein niedrigerer TS-Gehalt führte in Experimenten zu einer stärkeren Erhöhung des Rohproteingehalts im Vergleich zur eingesetzten Dünnschlempe. So wurde in Ausführungsbeispiel 4 beispielsweise die Verdünnung der Fest-Phase aus Schritt (b) auf einen TS-Gehalt von 9,0 Gew.-% mit der Verdünnung auf einen TS-Gehalt von 5,4 Gew.-% verglichen. Die stärkere Verdünnung (auf einen TS-Gehalt von 5,4 Gew.-%) führte zu einer Erhöhung des Rohproteingehalts im Vergleich zur verwendeten Dünnschlempe von 92 %rel. Die schwächere Verdünnung (auf einen TS-Gehalt von 9,0 Gew.-%) führte dagegen zu einer Erhöhung des Rohproteingehalts von 84 %rel. Dieses Ergebnis ist überraschend, da der Fachmann ausgehend vom Stand der Technik eine Verringerung des Rohproteingehalts durch den Einsatz von Ethanol erwartet hätte.

In Schritt (d) wird die verdünnte Fest-Phase aus Schritt (c) mittels Fest-Flüssig-Trennung in eine weitere Fest-Phase und eine weitere Flüssig-Phase aufgetrennt. Die weitere Fest-Phase enthält einen höheren Rohproteingehalt als die Dünnschlempe in Schritt (a) und auch einen höheren Rohproteingehalt als die Fest-Phase in Schritt (b).

Die Schritte (a) bis (d) können in einer bevorzugten Ausführungsform auch in einem Filtrationsapparat ohne zwischenzeitliche Entnahme der Fest-Phase realisiert werden. Dabei ist das Verfahren so ausgestaltet, dass die Fest-Flüssig-Trennung in Schritt (b) in der Filtrationsapparatur realisiert wird, und die Fest-Phase in der Filtrationsapparatur verbleibt. Die Zugabe von wässriger Lösung oder organischem Lösungsmittel zur Fest-Phase in Schritt (a) und Schritt (c) erfolgt direkt in der Filtrationsapparatur und die Separation der Fest-Phase in Schritt (d) kann in der gleichen Apparatur erfolgen. In dieser bevorzugten Ausführungsform sind die oben genannten TS-Gehalte der Gemische nach Zugabe von wässriger Lösung oder organischem Lösungsmittel als Rechengrößen zu verstehen. Wenn z.B. 1 t Dünnschlempekonzentrat mit einem TS-Gehalt von 30 Gew.-% in die Filtrationsapparatur gegeben wird und dann 1 t Frischwasser mit einem TS-Gehalt von ca. 0 Gew.-% durch den Filter gegeben wird, ergibt sich rechnerisch ein Gemisch mit einem TS-Gehalt von 15 Gew.-%.

In einer bevorzugten Ausführungsform umfasst das Verfahren ferner Schritt (e): Trocknen der Fest-Phase aus (d), wobei das Trocknen bevorzugt auf einen TS-Gehalt von mindestens 90 Gew.-% erfolgt.

In einer bevorzugten Ausführungsform kann das erfindungsgemäße Verfahren so ausgestaltet sein, dass die Fest-Flüssig-Trennung aus der Gruppe ausgewählt wird, bestehend aus Dekanter, Sedicanter, Separator und Filterapparat. In einer besonders bevorzugten Ausführungsform kann das erfindungsgemäße Verfahren so ausgestaltet sein, dass bei den Fest-Flüssig-Trennungen in Schritt (b) und (d) der TS-Gehalt der Fest-Phase möglichst hoch eingestellt wird. Dies hat den Vorteil, dass auf diese Weise ein hoher Wasseranteil von der Fest-Phase separiert wird und somit mehr im Wasser gelöste nicht-proteinhaltige Bestandteile von der Fest-Phase separiert werden können. Die routinemäßige Optimierung von Fest-Flüssig-Trennungen hinsichtlich eines hohen TS-Gehalts in der Fest-Phase ist dem Fachmann bekannt.

In einer bevorzugten Ausführungsform kann das erfindungsgemäße Verfahren so ausgestaltet sein, dass in einem der genannten Schritte zusätzlich eine enzymatische Behandlung stattfindet. In einer besonders bevorzugten Ausführungsform werden für die enzymatischen Behandlung bevorzugt Enzyme ausgewählt aus der Gruppe bestehend aus Peroxidasen, Laccasen, Pektinasen, Lipasen, Phytasen, und oligosaccharid-abbauende Enzyme wie z.B. Amylasen, Cellulasen und Hemicellulasen. Dies ist vorteilhaft, da so nicht-proteinhaltige Substanzen in Lösung gebracht und damit in einer Fest-Flüssig-Trennung teilweise abgetrennt werden können. Proteasen können ggf. zusätzlich zur Verbesserung der Produkteigenschaften eingesetzt werden. Dabei kann es allerdings auch nachteilig dazu kommen, dass der Rohproteingehalt im Produkt sinkt. Die Auswahl geeigneter Enzyme und deren Einsatz sind dem Fachmann bekannt.

In einer bevorzugten Ausführungsform kann das erfindungsgemäße Verfahren so ausgestaltet sein, dass das Verfahren eine Erhöhung des Rohproteingehalts von Dünnschlempe zu Proteinprodukt von mindestens 63 %rel, bevorzugt mindestens 75 %rel bewirkt. Zum Beispiel konnte ohne den Einsatz von organischem Lösungsmittel nur eine Erhöhung des Rohproteingehalts von 58 %rel bis 62 %rel erreicht werden (siehe Ausführungsbeispiele 4 und 7d). Mit Einsatz von organischem Lösungsmittel war dagegen in den Ausführungsbeispielen eine Erhöhung des Rohproteingehalts von über 75 %rel möglich.

### Ausführungsbeispiele

### Ausführungsbeispiel 1 (nicht gemäß der beanspruchten Erfindung)

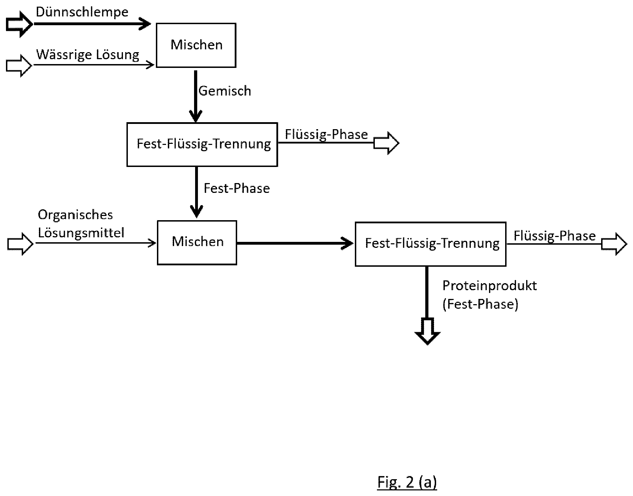

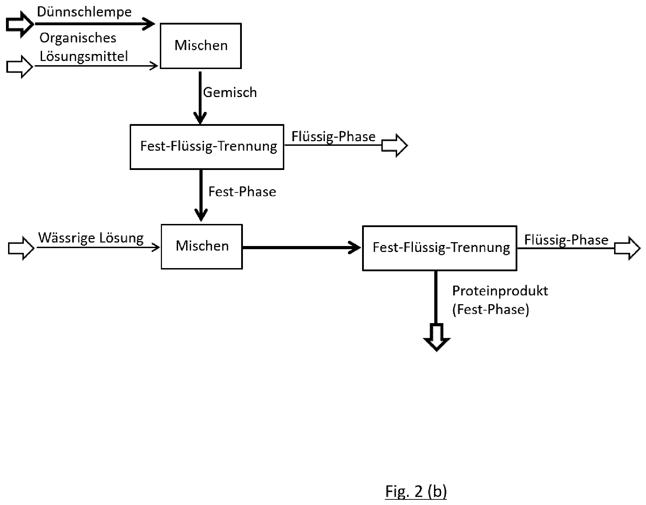

Figur 2 (a) und (b) zeigen schematische Darstellungen des Verfahrens, welche im Folgenden exemplarisch anhand der Gewinnung eines Proteinproduktes aus Dünnschlempe erläutert werden.

### Ausführungsbeispiel 1 (a)

Figur 2 (a) zeigt eine mögliche Ausführungsform des Verfahrens.

**Schritt** (a): Einer Dünnschlempe wird eine wässrige Lösung zugegeben.

**Schritt (b):** Das Gemisch aus Schritt (a) wird einem Dekanter zur Fest-Flüssig-Trennung zugeführt und in eine Fest-Phase und eine Flüssig-Phase separiert.

**Schritt (c):** Der Fest-Phase aus Schritt (b) wird ein organisches Lösungsmittel zugegeben. Dies ist in diesem Beispiel an dieser Stelle obligatorisch, da in Schritt (a) kein organisches Lösungsmittel zugegeben wurde.

**Schritt (d):** Das Gemisch aus Schritt (c) wird einem Separator zur Fest-Flüssig-Trennung zugeführt und in eine Fest-Phase und eine Flüssig-Phase separiert. Die Fest-Phase stellt das Proteinprodukt dar und enthält einen höheren Rohproteingehalt als die bereitgestellte Dünnschlempe in Schritt (a).

### Ausführungsbeispiel 1 (b)

Figur 2 (b) zeigt eine mögliche Ausführungsform des Verfahrens.

**Schritt (a):** Einer Dünnschlempe wird ein organisches Lösungsmittel zugegeben.

**Schritt (b):** Das Gemisch aus Schritt (a) wird einem Dekanter zur Fest-Flüssig-Trennung zugeführt und in eine Fest-Phase und eine Flüssig-Phase separiert.

**Schritt (c):** Der Fest-Phase aus Schritt (b) wird eine wässrige Lösung zugegeben. Die Zugabe eines organischen Lösungsmittels ist in diesem Beispiel an dieser Stelle nicht obligatorisch, da in Schritt (a) bereits organisches Lösungsmittel zugegeben wurde.

**Schritt (d):** Das Gemisch aus Schritt (c) wird einem Separator zur Fest-Flüssig-Trennung zugeführt und in eine Fest-Phase und eine Flüssig-Phase separiert. Die Fest-Phase stellt das Proteinprodukt dar und enthält einen höheren Rohproteingehalt als die bereitgestellte Dünnschlempe in Schritt (a).

### Ausführungsbeispiel 2

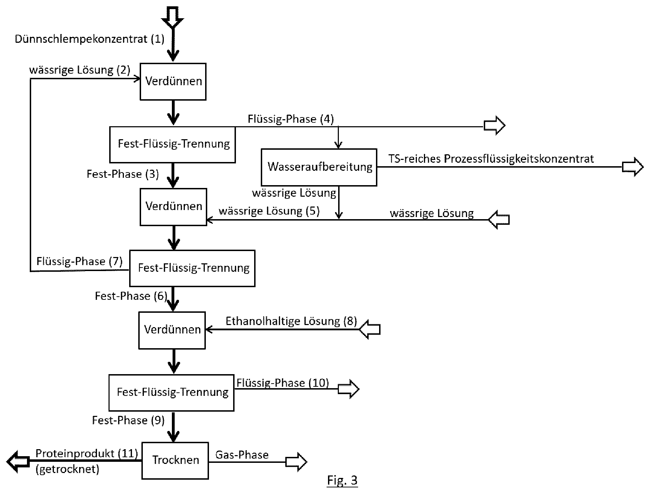

Figur 3 zeigt eine schematische Darstellung des Verfahrens, welches im Folgenden exemplarisch anhand der Gewinnung eines Proteinproduktes aus Dünnschlempekonzentrat erläutert wird.

**Schritt (a):** 100 t/h Dünnschlempekonzentrat (1) werden mit wässriger Lösung (2) auf einen TS-Gehalt von 19 Gew.-% verdünnt. Die wässrige Lösung ist die Flüssig-Phase (7) aus Schritt (b.2) und weist einen TS-Gehalt von unter 10 Gew.-% auf.

**Schritt (b):** Das verdünnte Dünnschlempekonzentrat aus Schritt (a) wird einem Dekanter zur Fest-Flüssig-Trennung zugeführt und in eine Fest-Phase (3) und eine Flüssig-Phase (4) separiert. Die Flüssig-Phase wird einer Prozesswasseraufbereitung zugeführt, in der ein TSreiches Prozessflüssigkeitskonzentrat und eine wässrige Lösung mit einem TS-Gehalt von kleiner 0,5 Gew.-% erzeugt werden.

**Schritt (b.2):** Die Fest-Phase aus Schritt (b) wird mit wässriger Lösung (5) auf einen TS-Gehalt von 11 Gew.-% verdünnt. Diese wässrige Lösung weist einen TS-Gehalt von kleiner 0,5 Gew.-% auf. Sie stammt teilweise aus der Prozesswasseraufbereitung in Schritt (b). Der restliche Teil besteht aus weiteren wässrigen Lösungen mit einem TS-Gehalt von ca. 0 Gew.-% oder Frischwasser. Die verdünnte Fest-Phase wird einem Separator zur Fest-Flüssig-Trennung zugeführt und in eine Fest-Phase (6) und eine Flüssig-Phase (7) separiert.

**Schritt (c):** Die Fest-Phase aus Schritt (b.2) wird mit ethanolhaltiger Lösung (8) auf einen TS-Gehalt von 8 Gew.-% verdünnt. Der Massenanteil von Ethanol an der ethanolhaltigen Lösung beträgt 80 Gew.-%.

**Schritt (d):** Die verdünnte Fest-Phase aus Schritt (c) wird einem Separator zur Fest-Flüssig-Trennung zugeführt und in eine Fest-Phase (9) und eine Flüssig-Phase (10) separiert.

**Schritt (e):** Die Fest-Phase aus Schritt (d) wird einer Trocknung zugeführt, in der derTS-Gehalt auf 90 Gew.-% angehoben wird. Die getrocknete Fest-Phase (11) stellt das Proteinprodukt dar. Das Proteinprodukt weist eine Erhöhung des Rohproteingehalts im Vergleich zum bereitgestellten Dünnschlempekonzentrats in Schritt (a) von 89 %rel auf.

### Ausführungsbeispiel 3

In Ausführungsbeispiel 3 wird variiert, in welchem Schritt das organische Lösungsmittel zugegeben wird. Im Ausführungsbeispiel 3a) wird das organische Lösungsmittel zu Dünnschlempe hinzugegeben. Im Ausführungsbeispiel 3b) wird zu Dünnschlempe Wasser gegeben und der nach einer Fest-Flüssig-Trennung entstehenden Fest-Phase wird dann das organische Lösungsmittel zugegeben.

### 3a) Zugabe organisches Lösungsmittel zu Dünnschlempe

**Schritt 1:** Dünnschlempe aus einer industriellen Bioethanolherstellung mit Roggen und Triticale als Hauptrohstoffe wird bereitgestellt.

**Schritt 2:** Die Dünnschlempe aus Schritt 1 wird mit reinem Ethanol, im Folgenden als EtOH abgekürzt, gut vermischt. Der TS-Gehalt der mit EtOH verdünnten Dünnschlempe beträgt 3,3 Gew.-%.

**Schritt 3:** Die Suspension aus Schritt 2 wird bei 4500 g für 15 Minuten zentrifugiert, der Überstand wird dekantiert.

**Schritt 4:** Das Sediment (Fest-Phase) aus Schritt 3 wird mit Wasser auf einen TS-Gehalt von 4,7 Gew.-% verdünnt.

**Schritt 5:** Die Suspension aus Schritt 4 wird bei 4500 g für 15 Minuten zentrifugiert, der Überstand wird dekantiert.

**Schritt 6:** Das Sediment (Fest-Phase) aus Schritt 5 wird auf den Rohproteingehalt analysiert. Die Erhöhung des Rohproteingehalts im Vergleich zur Dünnschlempe beträgt 76 %rel.

### 3b) Zugabe organisches Lösungsmittel zu Fest-Phase

**Schritt 1:** Dünnschlempe aus einer industriellen Bioethanolherstellung mit Roggen und Triticale als Hauptrohstoff wird bereitgestellt.

**Schritt 2:** Die Dünnschlempe aus Schritt 1 wird mit Frischwasser gut vermischt. Der TS-Gehalt der verdünnten Dünnschlempe beträgt 2,7 Gew.-%.

**Schritt 3:** Die Suspension aus Schritt 2 wird bei 4500 g für 15 Minuten zentrifugiert, der Überstand wird dekantiert.

**Schritt 4:** Das Sediment (Fest-Phase) aus Schritt 3 wird mit EtOH auf einen TS-Gehalt von 3,0 Gew.-% verdünnt.

**Schritt 5:** Die Suspension aus Schritt 4 wird bei 4500 g für 15 Minuten zentrifugiert, der Überstand wird dekantiert.

**Schritt 6:** Das Sediment (Fest-Phase) aus Schritt 5 wird auf den Rohproteingehalt analysiert. Die Erhöhung des Rohproteingehalts im Vergleich zur Dünnschlempe beträgt 88 %rel.

### Ausführungsbeispiel 4

In Ausführungsbeispiel 4 wird die Zugabe von organischem Lösungsmittel mit der Zugabe von Wasser verglichen.

**Schritt 1** Dünnschlempe aus einer industriellen Bioethanolherstellung mit Roggen als Hauptrohstoff wird bereitgestellt.

**Schritt 2:** In einem Becherglas wird Dünnschlempe mit Wasser klumpenfrei suspendiert. Der TS-Gehalt der verdünnten Dünnschlempe beträgt 3,4 Gew.-%.

**Schritt 3:** In vier ausgewogenen Zentrifugenbecher mit jeweils 700 ml Fassungsvermögen werden jeweils 600 g verdünnte Dünnschlempe aus Schritt 2 gegeben. Anschließend werden diese in einer Zentrifuge bei 4500 g für 15 Minuten zentrifugiert und anschließend dekantiert. Durch erneutes Wiegen und subtrahieren des Leergewichts des Zentrifugenbechers wird das Gewicht der festen Phase bestimmt.

**Schritt 4:** In den Zentrifugenbecher aus Schritt 3, wird die Fest-Phase entweder mit Wasser oder Ethanol (EtOH-Konzentration > 99%) verdünnt. In Zentrifugenbecher 1 wird mit Wasser auf einen TS-Gehalt von 7,7 Gew.-% verdünnt. In Zentrifugenbecher 2 wird mit Wasser auf einen TS-Gehalt von 4,5 Gew.-% verdünnt. In Zentrifugenbecher 3 wird mit Ethanol auf einen TS-Gehalt von 9,0 Gew.-% verdünnt. In Zentrifugenbecher 4 wird mit Ethanol auf einen TS-Gehalt von 5,4 Gew.-% verdünnt.

Durch den Dichteunterschied zwischen Wasser zu Ethanol ergibt sich ein gleiches Volumen in den Bechern 1 und 3, sowie in den Bechern 2 und 4. Becher 1 und 2 entsprechen keiner erfindungsgemäßen Ausführungsform des Verfahrens, da kein organisches Lösungsmittel zugegeben wird.

**Schritt 5:** Die Inhalte der Zentrifugenbecher aus Schritt 4 werden klumpenfrei suspendiert.

**Schritt 6:** Die Zentrifugenbecher aus Schritt 5 werden in einer Zentrifuge bei 4500 g für 15 Minuten zentrifugiert und anschließend dekantiert. Durch erneutes Wiegen und Subtraktion der Leergewichte werden die Massen der Fest-Phasen bestimmt.

**Schritt 7:** Die Fest-Phasen aus Schritt 6 werden auf ihren Rohproteingehalt analysiert. Die Erhöhung des Rohproteingehalts im Vergleich zur Dünnschlempe beträgt 62 %rel für Becher 1, 62 %rel für Becher 2, 84 %rel für Becher 3, und 92 %rel für Becher 4. Dieses Beispiel zeigt den Vorteil des Einsatzes des organischen Lösungsmittels, was zu einer deutlichen Erhöhung des Rohproteingehalts führt im Vergleich zum lediglichen Einsatz von Wasser.

### Ausführungsbeispiel 5

**Schritt 1:** Dünnschlempe aus einer industriellen Bioethanolherstellung mit Weizen als Hauptrohstoff wird bereitgestellt.

**Schritt 2:** Die Dünnschlempe aus Schritt 1 wird mit Wasser auf einen TS-Gehalt von 3 Gew.-% verdünnt und gut vermischt.

**Schritt 3:** Die Suspension aus Schritt 2 wird bei 4500 g für 15 Minuten zentrifugiert. Der Überstand wird dekantiert.

**Schritt 4:** Das Sediment (Fest-Phase) aus Schritt 3 wird auf Rohproteingehalt analysiert. Die Erhöhung des Rohproteingehalts im Vergleich zur Dünnschlempe beträgt 53 %rel.

**Schritt 5:** Das Sediment (Fest-Phase) aus Schritt 3 wird mit EtOH auf einen TS-Gehalt von 4,8 Gew.-% verdünnt.

**Schritt 6:** Die Suspension aus Schritt 5 wird bei 4500 g für 15 Minuten zentrifugiert, der Überstand wird dekantiert.

**Schritt 7:** Das Sediment (Fest-Phase) aus Schritt 6 wird auf Rohproteingehalt analysiert. Die Erhöhung des Rohproteingehalts im Vergleich zur Dünnschlempe beträgt 75 %rel.

### Ausführungsbeispiel 6

**Schritt 1:** Dünnschlempe aus einer industriellen Bioethanolherstellung mit Mais als Hauptrohstoff wird bereitgestellt.

**Schritt 2:** Die Dünnschlempe aus Schritt 1 wird mit Wasser auf eine TS-Gehalt von 2,7 Gew.-% verdünnt und gut vermischt.

**Schritt 3:** Die Suspension aus Schritt 2 wird bei 4500 g für 15 Minuten zentrifugiert. Der Überstand wird dekantiert.

**Schritt 4:** Das Sediment (Fest-Phase) aus Schritt 3 wird auf Rohproteingehalt analysiert. Die Erhöhung des Rohproteingehalts im Vergleich zur Dünnschlempe beträgt 73 %rel.

**Schritt 5:** Das Sediment (Fest-Phase) aus Schritt 3 wird mit EtOH auf einen TS-Gehalt von 4,4 Gew.-% verdünnt und resuspendiert

**Schritt 6:** Die Suspension aus Schritt 5 wird bei 4500 g für 15 Minuten zentrifugiert, der Überstand wird dekantiert.

**Schritt 7:** Das Sediment (Fest-Phase) aus Schritt 6 wird auf Rohproteingehalt analysiert. Die Erhöhung des Rohproteingehalts im Vergleich zur Dünnschlempe beträgt 108 %rel.

### Ausführungsbeispiel 7

Im Folgenden wird der Einsatz von verschiedenen organischen Lösungsmitteln im Vergleich zum Einsatz von Wasser untersucht.

### 7a) Ethanol als organisches Lösungsmittel

**Schritt 1:** Dünnschlempe aus einer industriellen Bioethanolherstellung mit Triticale als Hauptrohstoff wird bereitgestellt.

**Schritt 2:** Die Dünnschlempe aus Schritt 1 wird mit Wasser auf einen TS-Gehalt von 3,4 Gew.-% verdünnt und gut vermischt.

**Schritt 3:** Die Suspension aus Schritt 2 wird einer Fest-Flüssig-Trennung unterzogen. Der Überstand wird dekantiert.

**Schritt 4:** Das Sediment (Fest-Phase) aus Schritt 3 wird auf Rohproteingehalt analysiert. Die Erhöhung des Rohproteingehalts im Vergleich zur Dünnschlempe beträgt 56 %rel.

**Schritt 5:** Das Sediment (Fest-Phase) aus Schritt 3 wird mit EtOH auf einen TS-Gehalt von 5,6 Gew.-% verdünnt und resuspendiert.

**Schritt 6:** Die Suspension aus Schritt 5 wird bei 4500 g für 15 Minuten zentrifugiert. Der Überstand wird dekantiert.

**Schritt 7:** Das Sediment (Fest-Phase) aus Schritt 6 wird auf TS-Gehalt und Rohproteingehalt analysiert. Die Erhöhung des Rohproteingehalts beträgt 75 %rel im Vergleich zur Dünnschlempe und 35 %rel im Vergleich zur Fest-Phase in Schritt 4.

### 7b) Isopropanol als organisches Lösungsmittel (nicht gemäß der beanspruchten Erfindung)

**Schritt 1:** Das Sediment (Fest-Phase) aus Ausführungsbeispiel 7a), Schritt 3, wird mit Isopropanol auf eine TS-Gehalt von 3,4 Gew.-% verdünnt und resuspendiert.

**Schritt 2:** Die Suspension aus Schritt 1 wird bei 4500 g für 15 Minuten zentrifugiert. Der Überstand wird dekantiert.

**Schritt 3:** Das Sediment (Fest-Phase) aus Schritt 2 wird auf Rohproteingehalt analysiert. Die Erhöhung des Rohproteingehalts beträgt 82 %rel im Vergleich zur Dünnschlempe und 48 %rel im Vergleich zur Fest-Phase in Ausführungsbeispiel 7a), Schritt 4.

### 7c) Ethylacetat als organisches Lösungsmittel (nicht gemäß der beanspruchten Erfindung)

**Schritt 1:** Das Sediment (Fest-Phase) aus Ausführungsbeispiel 7a), Schritt 3, wird mit Ethylacetat auf einen TS-Gehalt von 3,4 Gew.-% verdünnt und resuspendiert.

**Schritt 2:** Die Suspension aus Schritt 1 wird bei 4500 g für 15 Minuten zentrifugiert. Der Überstand wird dekantiert.

**Schritt 3:** Das Sediment (Fest-Phase) aus Schritt 2 wird auf Rohproteingehalt analysiert. Die Erhöhung des Rohproteingehalts im Vergleich zur Dünnschlempe beträgt 80 %rel und 44 %rel im Vergleich zur Fest-Phase in Ausführungsbeispiel 7a), Schritt 4.

### 7d) Nicht-erfindungsgemäßes Beispiel mit Wasser statt organischem Lösungsmittel

**Schritt 1:** Das Sediment (Fest-Phase) aus Ausführungsbeispiel 7a), Schritt 3, wird mit Wasser auf einen TS-Gehalt von 3,4 Gew.-% verdünnt und resuspendiert.

**Schritt 2:** Die Suspension aus Schritt 1 wird bei 4500 g für 15 Minuten zentrifugiert, der Überstand wird dekantiert.

**Schritt 3:** Das Sediment (Fest-Phase) aus Schritt 2 wird auf Rohproteingehalt analysiert. Die Erhöhung des Rohproteingehalts im Vergleich zur Dünnschlempe beträgt 58 %rel. Es hat sich keine wesentliche Erhöhung des Rohproteingehalts im Vergleich zur Fest-Phase in Ausführungsbeispiel 7a), Schritt 4, ergeben.

## Patentansprüche

1. Verfahren zur Herstellung eines Proteinproduktes aus Dünnschlempe, umfasst die Schritte:
a) Herstellen eines ersten Gemisches aus i) Dünnschlempe und ii) einer ersten wässrigen Lösung oder einem ersten organischen Lösungsmittel;
b) Separieren einer Fest-Phase aus dem ersten Gemisch mittels einer ersten Fest-Flüssig-Trennung;
c) Herstellen eines zweiten Gemisches aus i) der Fest-Phase und ii) einer zweiten wässrigen Lösung oder einem zweiten organischen Lösungsmittel mit der Maßgabe, dass das erste Gemisch und/oder das zweite Gemisch ein organisches Lösungsmittel enthalten muss, wobei das erste und/oder zweite organische Lösungsmittel Ethanol, Isopropanol oder Ethylacetat enthält, und wobei das erste und/oder zweite organische Lösungsmittel mindestens 80 Gew.-% Ethanol enthält; und
d) Separieren einer Fest-Phase aus dem zweiten Gemisch mittels einer zweiten Fest-Flüssig-Trennung, wobei die Fest-Phase das Proteinprodukt umfasst oder beinhaltet.

2. Das Verfahren nach Anspruch 1, wobei in Schritt a) die Menge an wässriger Lösung oder organischem Lösungsmittel so gewählt wird, dass sich im ersten Gemisch ein TS-Gehalt von max. 19 Gew.-%, bevorzugt max. 9 Gew.-%, besonders bevorzugt max. 4 Gew.-% ergibt.

3. Das Verfahren nach Anspruch 1, wobei das Verfahren ferner Schritt b.2) umfasst: Zugabe einer wässrigen Lösung zur Fest-Phase aus b), wobei die Fest-Phase vorzugsweise auf einen TS-Gehalt von kleiner als 15 Gew.-%, bevorzugt kleiner als 11 Gew.-%, besonders bevorzugt kleiner als 8 Gew.-% verdünnt wird, und Separieren einer weiteren Fest-Phase mittels Fest-Flüssig-Trennung, wobei die weitere Fest-Phase Schritt c) zugeführt wird.

4. Das Verfahren nach Anspruch 3, wobei mindestens ein Teil der Flüssig-Phase aus Schritt b.2) als wässrige Lösung Schritt a) zugeführt wird.

5. Das Verfahren nach Anspruch 1, wobei in Schritt c) so viel organisches Lösungsmittel zugegeben wird, dass sich im Gemisch ein TS-Gehalt von max. 15 Gew.-%, bevorzugt max. 9 Gew.-%, besonders bevorzugt max. 6 Gew.-% ergibt.

6. Das Verfahren nach Anspruch 1, wobei das Verfahren ferner Schritt e) umfasst: Trocknen der Produktphase aus d), wobei das Trocknen bevorzugt auf einen TS-Gehalt von mindestens 90 Gew.-% erfolgt.

7. Das Verfahren nach Anspruch 1, wobei die Dünnschlempe vor der Herstellung des Gemisches in Schritt a) zu Dünnschlempekonzentrat eingedampft wird.

8. Das Verfahren nach Anspruch 7, wobei das Dünnschlempekonzentrat vor der Herstellung des Gemisches in Schritt a) einer Ölabtrennung zugeführt wird.

9. Das Verfahren nach Anspruch 1, wobei Schritte b) bis d) in einer Filtrationsapparatur durchgeführt werden.

## Claims

1. A process for producing a protein product from thin stillage, the process comprising the steps of:
a) producing a first mixture from i) thin stillage and ii) a first aqueous solution or a first organic solvent;
b) separating a solid phase from the first mixture by means of a first solid-liquid separation;
c) producing a second mixture from i) the solid phase and ii) a second aqueous solution or a second organic solvent, provided that the first mixture and/or the second mixture must contain an organic solvent, wherein the first and/or second organic solvent comprises ethanol, isopropanol, or ethyl acetate, and wherein the first and/or second organic solvent contains at least 80 wt.%; and
d) separating a solid phase from the second mixture by means of a second solid-liquid separation, wherein the solid phase comprises the protein product.

2. The process according to claim 1, wherein in step a) the amount of aqueous solution or organic solvent is selected such that the first mixture has a DS content of at most 19 wt.%, preferably at most 9 wt.%, particularly preferably at most 4 wt.%.

3. The process according to claim 1, wherein the process further comprises step b.2): adding an aqueous solution to the solid phase from b), wherein the solid phase is preferably diluted to a DS content of less than 15 wt.%, preferably less than 11 wt.%, particularly preferably less than 8 wt.%, and separating a further solid phase by means of solid-liquid separation, wherein the further solid phase is fed to step c).

4. The process according to claim 3, wherein at least part of the liquid phase from step b.2) is fed as an aqueous solution to step a).

5. The process according to claim 1, wherein in step c) an amount of organic solvent is added such that the mixture has a DS content of at most 15 wt.%, preferably at most 9 wt.%, particularly preferably at most 6 wt.%.

6. The process according to claim 1, wherein the process further comprises step e): drying the product phase from d), wherein the drying is preferably carried out to a DS content of at least 90 wt.%.

7. The process according to claim 1, wherein the thin stillage is evaporated to thin stillage concentrate prior to the preparation of the mixture in step a).

8. The process according to claim 7, wherein the thin stillage concentrate is fed to an oil separation prior to the production of the mixture in step a).

9. The process according to claim 1, wherein steps b) to d) are carried out in a filtration apparatus.

## Revendications

1. Procédé de fabrication d'un produit protéique à partir d'une vinasse fine, comprenant les étapes suivantes :
a) la fabrication d'un premier mélange à partir de i) vinasse fine et ii) d'une première solution aqueuse ou d'un premier solvant organique ;
b) la séparation d'une phase solide du premier mélange au moyen d'une première séparation solide-liquide ;
c) la fabrication d'un deuxième mélange à partir de i) la phase solide et ii) d'une deuxième solution aqueuse ou d'un deuxième solvant organique, à condition que le premier mélange et/ou le deuxième mélange contiennent un solvant organique, le premier et/ou le deuxième solvant organique contenant de l'éthanol, de l'isopropanol ou de l'acétate d'éthyle, et le premier et/ou le deuxième solvant organique contenant au moins 80 % en poids d'éthanol ; et
d) la séparation d'une phase solide du deuxième mélange au moyen d'une deuxième séparation solide-liquide, la phase solide comprenant ou comportant le produit protéique.

2. Procédé selon la revendication 1, dans lequel, dans l'étape a), la quantité de solution aqueuse ou de solvant organique est choisie de telle sorte qu'il en résulte dans le premier mélange une teneur en MS de 19 % en poids maximum, de préférence de 9 % en poids maximum, et de manière particulièrement préférée de 4 % en poids maximum.

3. Procédé selon la revendication 1, dans lequel le procédé comprend en outre l'étape b.2) : l'ajout d'une solution aqueuse à la phase solide de b), la phase solide étant de préférence diluée à une teneur en MS inférieure à 15 % en poids, de préférence inférieure à 11 % en poids, et de manière particulièrement préférée inférieure à 8 % en poids, et la séparation d'une autre phase solide au moyen d'une séparation solide-liquide, l'autre phase solide étant fournie à l'étape c).

4. Procédé selon la revendication 3, dans lequel au moins une partie de la phase liquide de l'étape b.2) est fournie à l'étape a) comme solution aqueuse.

5. Procédé selon la revendication 1, dans lequel, dans l'étape c), une quantité suffisante de solvant organique est ajoutée pour qu'il en résulte dans le mélange une teneur en MS de 15 % en poids maximum, de préférence de 9 % en poids maximum, et de manière particulièrement préférée de 6 % en poids maximum.

6. Procédé selon la revendication 1, dans lequel le procédé comprend en outre l'étape e) : le séchage de la phase de produit de d), le séchage étant de préférence effectué à une teneur en MS d'au moins 90 % en poids.

7. Procédé selon la revendication 1, dans lequel la vinasse fine est évaporée en un concentré de vinasse fine avant la fabrication du mélange dans l'étape a).

8. Procédé selon la revendication 7, dans lequel le concentré de vinasse fine est fourni à une séparation d'huile avant la fabrication du mélange dans l'étape a).

9. Procédé selon la revendication 1, dans lequel les étapes b) à d) sont effectuées dans un appareil de filtration.
